(19) **Europäisches Patentamt**
**European Patent Office**
**Office européen des brevets**

(11) **EP 4 049 811 B1**

(12) **EUROPEAN PATENT SPECIFICATION**

(45) Date of publication and mention
of the grant of the patent:
**27.11.2024 Bulletin 2024/48**

(21) Application number: **20878163.3**

(22) Date of filing: **07.10.2020**

(51) International Patent Classification (IPC):
***B25J 15/06*** (2006.01)    ***B25J 9/16*** (2006.01)
***B25J 19/00*** (2006.01)    ***B25J 13/08*** (2006.01)
***G05B 19/4065*** (2006.01)    ***G01B 7/16*** (2006.01)

(52) Cooperative Patent Classification (CPC):
**B25J 15/0616; B25J 9/1674; B25J 13/087;**
**G01B 7/22; G05B 19/4065;** G05B 2219/49136

(86) International application number:
**PCT/JP2020/037941**

(87) International publication number:
**WO 2021/079738 (29.04.2021 Gazette 2021/17)**

(54) **DETERIORATION DETERMINATION DEVICE, DETERIORATION DETERMINATION METHOD, AND CONTROL PROGRAM**

VORRICHTUNG ZUR VERSCHLECHTERUNGSBESTIMMUNG, VERFAHREN ZUR VERSCHLECHTERUNGSBESTIMMUNG UND STEUERPROGRAMM

DISPOSITIF DE DÉTERMINATION DE DÉTÉRIORATION, PROCÉDÉ DE DÉTERMINATION DE DÉTÉRIORATION ET PROGRAMME DE COMMANDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.10.2019 JP 2019194611**

(43) Date of publication of application:
**31.08.2022 Bulletin 2022/35**

(73) Proprietor: **OMRON Corporation**
**Shiokoji-dori, Shimogyo-Ku**
**Kyoto-shi**
**Kyoto 600-8530 (JP)**

(72) Inventors:
• **DOI, Sayaka**
**Kyoto-shi, Kyoto 600-8530 (JP)**

• **KOGA, Hiroki**
**Kyoto-shi, Kyoto 600-8530 (JP)**

(74) Representative: **Horn Kleimann Waitzhofer**
**Schmid-Dreyer**
**Patent- und Rechtsanwälte PartG mbB**
**Theresienhöhe 12**
**80339 München (DE)**

(56) References cited:
**WO-A1-2010/038315**    **WO-A1-2019/101668**
**JP-A- 2008 092 889**    **JP-A- 2008 092 889**
**JP-A- 2012 504 053**    **JP-A- 2013 094 126**
**JP-A- 2015 167 495**    **JP-A- 2015 167 495**
**JP-A- 2016 197 096**    **US-A1- 2010 140 437**
**US-A1- 2010 140 437**

**Description**

TECHNICAL FIELD

The present invention relates to a deterioration determination apparatus for a suction apparatus.

BACKGROUND ART

A work robot that includes a robot arm including a plurality of arm members is known in the related art. Document JP 2015-150622A discloses, for example, a funnel-shaped suction member having an opening for sucking in external air and holding a workpiece by suction, in which a conductive wire for detecting breakage due to disconnection is provided around the opening. However, in the suction member disclosed in Document JP 2015-150622A, it is necessary to manufacture a dedicated pad, and thus there is the problem that the suction member has no versatility.

Document JP 2012-152843A discloses a robot including an end effector provided with a pressure sensor that detects a suction pressure of a suction pad. In the robot disclosed in Document JP 2012-152843A, it is necessary to accurately detect a change in pressure up to when the suction is completely performed, and thus it is not possible to accurately detect the degree of wear of the suction pad.

Document WO 2019/101668 A1 discloses a vacuum gripping device comprising at least one suction cup comprising at least one electrically conductive track secured to a skirt of the suction cup, wherein the conductive track is made of an elastically conductive and elastically deformable material to deform with the skirt. An electronic processing circuit is electrically connected to the conductive track and is arranged to monitor an electrical property of the conductive track. The electrical property varies with the deformation of the conductive track, and it is compared to reference data so as to anticipate a failure of the suction cup.

Document JP 2015-167495 A discloses a deterioration judgement method of a teat cup liner, wherein a degree of deterioration of a teat cup liner is me assured by placing a measuring tool in contact with the teat insertion opening of the teat cup liner to bring the teat cup unit into a milking state and measuring the flow velocity at which the measuring tool collapses during the massage period of the teat cup liner.

Document JP 2008-092889 A discloses a liner deterioration confirmation method for determining a degree of deterioration, wherein a vacuum pressure source of a milking machine is operated with a rod-shaped measuring device in contact with a lip opening of a teat cup liner to draw in the teat cup liner.

SUMMARY OF THE INVENTION

PROBLEM TO BE SOLVED BY THE INVENTION

An aspect of the present invention has been made in view of the above problems, and an object of the present invention is to provide a suction apparatus capable of easily determining whether or not a suction portion has deteriorated.

MEANS FOR SOLVING THE PROBLEMS

A deterioration determination apparatus according to an aspect of the present invention includes: a deformation information obtainment unit configured to obtain information on deformations of a suction portion occurring when the suction portion sequentially holds a plurality of objects having different masses by suction, which suction portion is configured to hold an object by suction with negative pressure and elastically deforms by the negative pressure; and a deterioration determination unit configured to determine whether the suction portion has deteriorated, depending on whether or not the deformations of the suction portion occurring when the suction portion sequentially holds the plurality of objects by suction are within normal ranges set for the respective objects.

According to the above configuration, it is possible to set a normal range of the deformation of the suction portion, by obtaining in advance information on the deformation of the suction portion in a normal state under a predetermined condition. As a result, it is possible to determine whether or not the suction portion has deteriorated, in accordance with the degree of the deformation of the suction portion. Information on the deformation of the suction portion can be obtained using a sensor, for example. Accordingly, the deterioration determination apparatus can easily determine whether or not the suction portion has deteriorated.

According to the above configuration, because it is determined whether or not the suction portion has deteriorated depending on the deformations of the suction portion occurring when the suction portion sequentially holds the plurality of objects having different masses by suction, it is possible to more appropriately determine whether or not the suction portion has deteriorated.

According to an embodiment of the present invention, it is possible to easily determine whether a suction portion has deteriorated.

The deterioration determination apparatus may further include a lifetime prediction unit configured to predict a lifetime of the suction portion, depending on a temporal change of the deformation of the suction portion occurring when the suction portion holds the object by suction.

According to the above configuration, the user can replace the suction portion at an appropriate timing. In addition, the user can schedule maintenance of the deterioration determination apparatus.

The deterioration determination unit may specify a value representing a spring constant of the suction portion, from the deformation of the suction portion occurring when the suction portion holds the object having a known mass by suction with a predetermined negative pressure, and determine whether or not the suction portion has deteriorated, depending on the value representing the spring constant.

According to the above configuration, it is possible to appropriately determine whether or not the suction portion has deteriorated, by assuming the suction portion as a spring.

The deformation information obtainment unit may obtain information on deformations of the suction portion occurring when the suction portion sequentially holds a plurality of objects having different masses by suction, and the deterioration determination unit may specify a value representing a spring constant of the suction portion, from the deformations of the suction portion occurring when the suction portion sequentially holds the plurality of objects by suction with one or more predetermined negative pressures, and determine whether or not the suction portion has deteriorated, depending on the value representing the spring constant.

The deformation information obtainment unit may obtain information on deformations of the suction portion occurring when the suction portion sequentially holds the object by suction with a plurality of negative pressures, and the deterioration determination unit may determine whether or not the suction portion has deteriorated, depending on the deformations of the suction portions occurring when the suction portion sequentially holds the object by suction with the plurality of negative pressures.

According to the above configuration, because it is determined whether or not the suction portion has deteriorated based on the deformations of the suction portion occurring when the suction portion sequentially holds the object by suction with the plurality of negative pressures, it is possible to more appropriately determine whether or not the suction portion has deteriorated.

A deterioration determination method according to an aspect of the present invention includes: a deformation information obtainment step of obtaining information on deformations of a suction portion occurring when the suction portion sequentially holds a plurality of objects having different masses by suction, which suction portion is configured to hold an object by suction with negative pressure and elastically deforms by the negative pressure; and a deterioration determination step of determining whether the suction portion has deteriorated, depending on whether or not the deformations of the suction portion occurring when the suction portion sequentially holds the plurality of objects by suction are within normal ranges set for the respective objects.

According to an embodiment of the present invention, it is possible to easily determine whether a suction portion has deteriorated.

According to the above configuration, because it is determined whether or not the suction portion has deteriorated depending on the deformations of the suction portion occurring when the suction portion sequentially holds the plurality of objects having different masses by suction, it is possible to more appropriately determine whether or not the suction portion has deteriorated.

The deterioration determination apparatus according to the aspects of the present invention may be achieved by a computer. In this case, the scope of the present invention may also include a control program for the deterioration determination apparatus that causes a computer to operate as the deterioration determination apparatus by causing the computer to operate as the units (software elements) included in the deterioration determination apparatus, and a computer-readable recording medium that records the control program.

BRIEF DESCRIPTION OF THE DRAWINGS

Fig. 1     shows an example of a configuration of a suction apparatus according to the present embodiment.

Fig. 2     shows an example of a cross-sectional view taken along line A-A of Fig. 1.

Fig. 3     is a block diagram schematically showing an example of the configuration of a suction system according to the present embodiment.

Fig. 4     illustrates the definition of the deformation amount of the suction portion according to the present embodiment.

Fig. 5     shows a relationship between a spring constant and the deformation amount of the suction portion according to the present embodiment.

Fig. 6     is a flowchart showing an operation example of the deterioration determination apparatus.

Fig. 7     is a flowchart showing another operation example of the deterioration determination apparatus.

Fig. 8     is a flowchart showing an operation example of the deterioration determination apparatus according to the embodiment of the present invention.

Fig. 9     is a flowchart showing still another operation example of the deterioration determination apparatus according to the embodiment of the present invention.

Fig. 10    shows an example of a temporal change in the deformation amount of the suction portion.

Fig. 11    shows an example of a temporal change in the spring constant of the suction portion.

EMBODIMENTS OF THE INVENTION

Hereinafter, an embodiment according to one aspect of the present invention (hereinafter, also referred to as "the present embodiment") will be described with reference to the drawings.

1. Application example

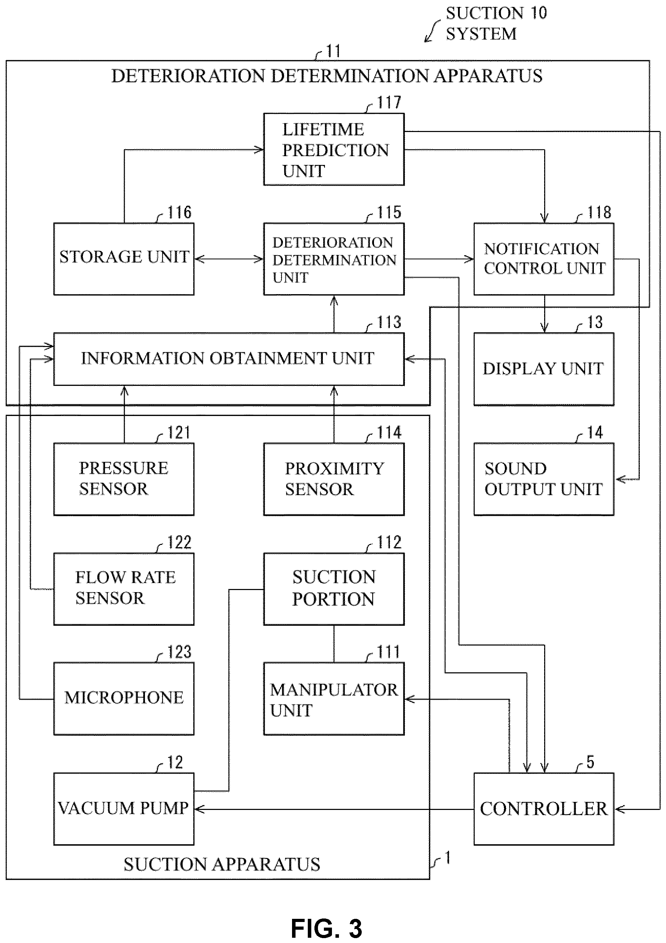

Fig. 3 is a block diagram schematically showing an example of the configuration of a suction system 10 according to the present embodiment. The suction system 10 includes a suction apparatus 1, a controller 5, a deterioration determination apparatus 11, a display unit 13, and a sound output unit 14. The suction apparatus 1 holds an object W by suction with negative pressure. The controller 5 controls the movement of the suction apparatus 1. The deterioration determination apparatus 11 obtains information on deformation occurring in the suction portion 112, and determines whether or not the suction portion 112 has deteriorated. The display unit 13 and the sound output unit 14 inform whether or not the suction portion 112 has deteriorated.

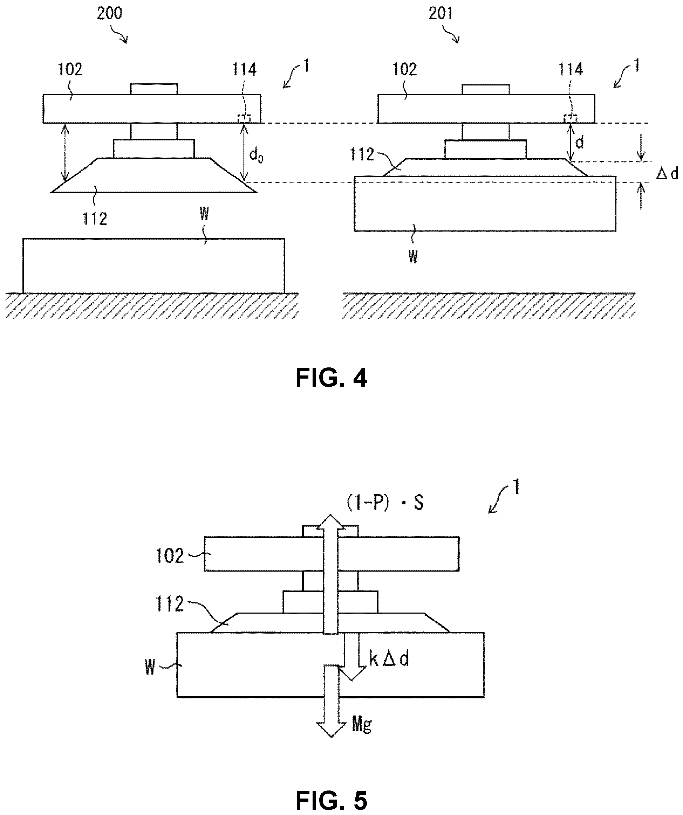

Fig. 4 illustrates the definition of the deformation amount of the suction portion 112 that is used in one embodiment of the present invention. Reference numeral 200 denotes a state in which the suction apparatus 1 does not holds the object W by suction. Reference numeral 201 denotes a state in which the suction apparatus 1 holds the object W by suction. The proximity sensor 114 measures a distance to a predetermined location in the suction portion 112. Here, for example, a vector N perpendicular to the surface of the body 102 on which the proximity sensor 114 is provided is considered. In this case, a distance from the proximity sensor 114 to a point at which a straight line that is parallel to the vector N and passes through the proximity sensor 114 intersects the upper portion of the suction portion is defined as the distance from the proximity sensor 114 to the suction portion.

However, when a capacitive proximity sensor or a strain sensor that does not directly output a distance is used, a correspondence relationship between a measurement value of the sensor (information indicating a degree of deformation) and a distance is stored in the storage unit 116 in advance, as a table or a relational expression. In this case, the distance that corresponds to the measurement value of the sensor stored in the above table or obtained from the relational expression is set as the distance from the proximity sensor 114 to the suction portion.

A distance from the proximity sensor 114 to the suction portion 112 in a state denoted by the reference numeral 200 (that is to say, in a state in which the suction portion 112 does not hold the object W by suction) is denoted by d0, and a distance from the proximity sensor 114 to the suction portion 112 in a state denoted by the reference numeral 201 (that is to say, in a state in which the suction portion 112 is holding the object W by suction) is denoted by d. Here, the deformation amount $\Delta d$ of the suction portion 112 is represented by d0-d. In the state denoted by the reference numeral 201, the suction portion 112 is elastically deformed by negative pressure, and is in intimate contact with the object W.

Next, the relationship between the deformation amount $\Delta d$ and the spring constant k will be described.

Fig. 5 shows a relationship between forces acting on the object W, when the suction portion 112 that is used in one embodiment of the present invention holds an object W that has a known mass.

The gravity acting on the object W and the restoring force by the suction portion 112 act on the object W in the vertically downward direction, and the suction force due to the negative pressure acts on the object W in the vertically upward direction.

Here, assuming that the mass of the object W is "M" and the gravitational acceleration is "g", the magnitude of the gravitational force acting on the object W is represented by "Mg". In addition, in a case where the elastically deforming suction portion 112 is assumed to be a spring, the spring constant of the suction portion 112 is defined as "k". By using the deformation amount $\Delta d$ described above, the restoring force by the suction portion 112 can be expressed as "k$\Delta d$". Furthermore, when the pressure inside the suction portion 112 is P [atm], the suction area (the area of the object W to which the negative pressure is applied) is S, and the atmospheric pressure is 1 atm, the suction force generated due to the negative pressure can be expressed as (1-P)S. At this time, in order for the suction portion 112 to continuously hold the object W by suction, the following force balance must be satisfied.

$$(1 - P)\,S = Mg + k\Delta d$$

Here, the mass M, the pressure P, and the suction area S of the object W are known values. Accordingly, the value of the spring constant k can be specified, by measuring the deformation amount $\Delta d$ of the suction portion 112. Note that, instead of the actual spring constant, it is also possible to specify a value that is determined unambiguously from the spring constant (for example, a value of M/$\Delta d$, which is obtained when the suction force is assumed to be constant) as a "value representing the spring constant". Specifying the spring constant is substantially synonymous with specifying a "value representing the spring constant", which is determined unambiguously from the spring constant.

The suction portion 112, which contains rubber and the like, becomes hard when the suction portion deteriorates, and thus the value of the spring constant k increases. Also, the value of k varies (e.g., the value of k decreases), when the mechanical structure of the suction pad changes due to cracking, wear, breakage, or the like.

For this reason, a normal range of the spring constant k is set in advance. When the spring constant k crosses a threshold value indicating an upper limit or a lower limit of the normal range, the deterioration determination apparatus 11 determines that the suction portion 112 has deteriorated. In addition, when the mass M and the pressure P of the predetermined object W are known, the normal range of the deformation amount Δd can be set in advance.

2. Configuration example

Fig. 3 is a block diagram showing a configuration of the suction system 10 according to the present embodiment. The suction system 10 includes a suction apparatus 1, a controller 5, a deterioration determination apparatus 11, a display unit 13, and a sound output unit 14. In the present embodiment, the suction apparatus 1 may be a fixed suction apparatus that is fixed at a predetermined position, or may also be a movable suction apparatus including an automated guided vehicle.

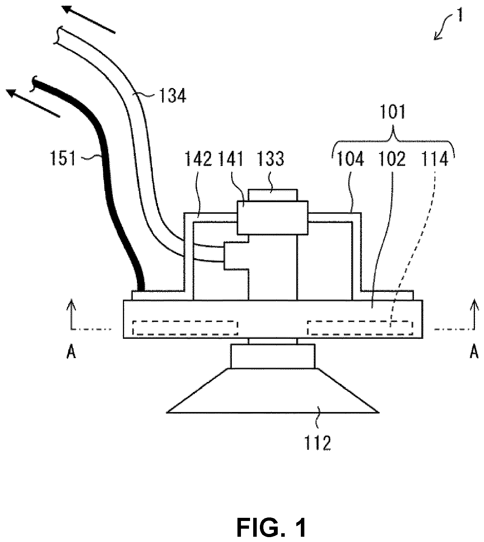

In the example of Fig. 1, the suction apparatus 1 includes a sensor assembly 101, a suction portion (suction pad) 112, and a shaft 133. An air passage for sucking in air is formed in the shaft 133. The air passage is connected to the suction portion 112 and a tube 134. The shaft 133 and a vacuum pump that generates negative pressure may be connected through the tube 134. The suction portion 112 of the suction apparatus 1 may be grounded.

Because the suction portion 112 is disposed on one end side of the shaft 133, the sensor assembly 101 is preferably attached to the shaft 133 on the other end side of the shaft 133, for example. However, in order to accurately detect the deformation of the suction portion 112, a body 102 is preferably disposed at a position close to the suction portion 112, for example.

A support portion 142 of a fixture 104 extends from a fixed portion 141 toward the suction portion 112. The body 102 is disposed on a suction portion 112 side relative to the fixed portion 141, using the support portion 142. With this configuration, it is possible to fix the fixture 104 to the other end side (the opposite side to the suction portion 112) of the shaft 133, and to dispose the sensor assembly 101 at a position close to the suction portion 112.

The sensor assembly 101 includes the body 102, one or more proximity sensors 114, and the fixture 104.

A space 105 (not shown) through which the shaft 133 of the suction apparatus 1 passes is formed in the body 102. The space 105 may be a hole, or a notch. The main body 102 is not in contact with the shaft 133, for example. The body 102 may have a circular shape, a quadrangular shape, or an elliptical shape. In addition, the space 105 may have a circular shape, a quadrangular shape, or an elliptical shape. The body 102 and a controller such as a programmable logic controller (PLC) or the deterioration determination apparatus 11 may be connected through a sensor wiring 151.

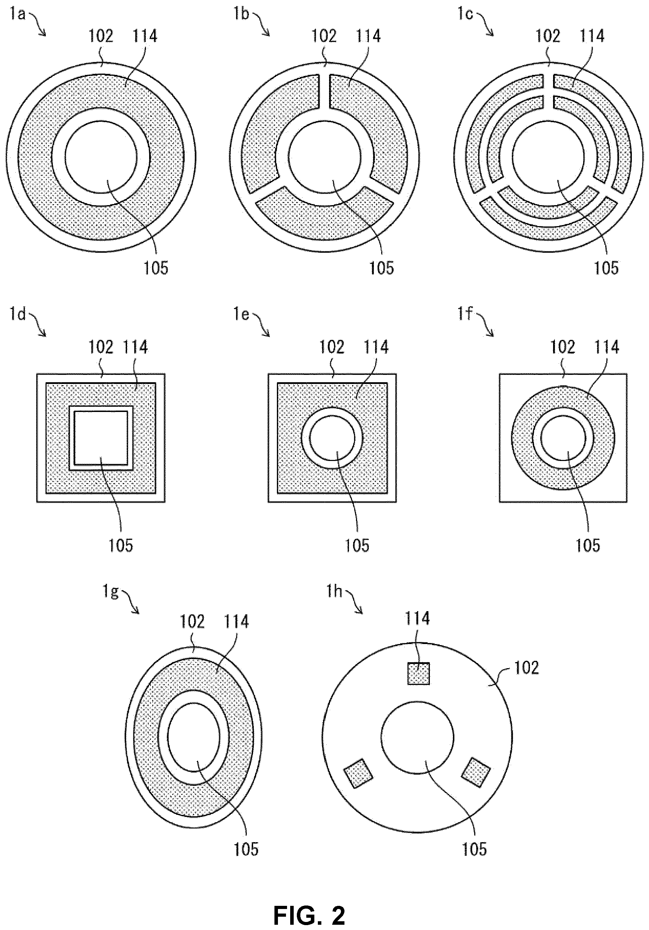

In the example 1a in Fig. 2, the proximity sensor 114 is disposed on the main body 102 along the circumferential direction of the space 105 (the shaft 133). In the example 1b in FIG. 2, a plurality of the proximity sensors 114 are disposed on the body 102 along the circumferential direction of the space 105 (the shaft 133). In the example 1c in Fig. 2, a plurality of the proximity sensors 114 are disposed on the body 102 along the circumferential direction and the radial direction with respect to the space 105 (the shaft 133). In the example 1d in Fig. 2, the space 105 has a quadrangular shape, and the proximity sensor 114 is disposed on the body 102 having a quadrangular outer shape. In the example 1e in Fig. 2, the space 105 has a circular shape, and the proximity sensor 114 is disposed on the body 102 having a quadrangular outer shape. In the example 1f in Fig. 2, the proximity sensor 114 is disposed on a quadrangular body 102 in which the space 105 has a circular shape. In the example 1g in Fig. 2, the proximity sensor 114 is disposed on an elliptical body 102 in which the space 105 has an elliptical shape. In the example 1h in Fig. 2, a plurality of the proximity sensors 114, which are sensor chips, are disposed on the body 102 along the circumferential direction of the space 105 (the shaft 133).

The suction portion 112 is elastically deformed. The suction portion 112 includes an elastic member, e.g. made of rubber. The suction portion 112 may be a nonconductive pad, but when the suction portion 112 is a conductive pad, the deformation amount of the suction portion 112 can be detected with high accuracy. A conductive pad (a pad for electrostatic diffusion or a pad that can be detected by metal detection) is suitable for the detection method disclosed in the present embodiment, because a conductive material such as metal is contained in the pad. When the suction portion 112 comes into contact with an object and the suction portion 112 is further pushed into the object, the electrostatic capacitance detected by the capacitive proximity sensor 114 increases rapidly. This is because the proximity sensor 114 and the conductive member of the suction portion 112 approach each other, as the suction unit 112 is pushed into the object. Therefore, when the suction portion 112 includes a conductive member at a displaced position and at least one of the proximity sensors 114 is a capacitive sensor, the deformation amount of the suction portion 112 can be accurately detected regardless of the dielectric constant of an object (workpiece).

Suction apparatus

The suction apparatus 1 includes a manipulator unit 111, a suction portion 112, a vacuum pump 12, a proximity sensor 114, a pressure sensor 121, a flow rate sensor 122, and a microphone 123.

The manipulator unit 111 is driven together with the suction portion 112, under control of the controller 5.

The manipulator unit 111 is, for example, an articulated robot arm having one or a plurality of joints.

When the suction portion 112 is positioned at a work position by driving of the manipulator unit 111, the suction portion 112 holds an object by suction with negative pressure that corresponds to the driving amount of the vacuum pump 12. The suction portion 112 is elastically deformed by negative pressure, and is brought into intimate contact with an object. In this manner, the suction portion 112 holds an object.

The vacuum pump 12 generates negative pressure that corresponds to the driving amount, and provides the generated negative pressure to the suction portion 112. In this case, an example in which the suction apparatus 1 included in the suction system 10 includes the vacuum pump 12 is described. However, in the present embodiment, the suction apparatus 1 in the suction system 10 does not necessarily have to include the vacuum pump 12, and for example, the vacuum pump 12 may also be provided outside the suction apparatus 1 and the suction system 10. Also with this configuration, the controller 5 controls the driving amount of the vacuum pump 12, so that the same effect as in the above-described example can be achieved.

The proximity sensor 114 measures the distance "d" to the suction portion 112, and outputs, to the information obtainment unit 113, information indicating the distance "d" (information indicating a degree of deformation of the suction portion 112). A proximity sensor that does not directly output a distance may also be used, as long as the relationship between the measurement value output from the proximity sensor and the distance "d" is known. Examples of a detection method of the proximity sensor 114 include a capacitive method, an optical method, an electromagnetic induction method, and an acoustic method such as a sound wave method or an ultrasonic method. Also, examples of the capacitive sensor include a self-capacitive sensor and a mutual capacitive sensor. Alternatively, a strain sensor may also be used, instead of a proximity sensor.

The pressure sensor 121 measures pressure P inside the suction portion 112 in which negative pressure is generated using the vacuum pump 12, and outputs information indicating the pressure P to the information obtainment unit 113.

The flow rate sensor 122 is disposed with respect to, for example, the tube 134, measures a flow rate of air flowing through the tube 134, and outputs information indicating the flow rate to the information obtainment unit 113.

The microphone 123 is disposed near the tube 134, and measures sound generated due to the flow of air. Examples of the sound include a sound generated when an object is held by suction with the suction portion 112 and air flowing into the air passage from a portion between the object and the suction portion 112 is blocked, and a sound generated due to air flowing through the tube. The sound measured by the microphone 123 varies depending on the flow rate of air. The microphone 123 outputs information on the measured sound to the information obtainment unit 113, as sound data.

Controller

The controller 5 includes, for example, a central processing unit (CPU), and a random access memory (RAM) or a read only memory (ROM), and performs control in response to an information process. In addition, the controller 5 controls the manipulator unit 111. In this manner, the controller 5 moves the suction portion 112 through the manipulator unit 111. Specifically, the controller 5 drives the manipulator unit 111 so that the suction portion 112 is positioned at a work position where the suction portion 120 can hold an object by suction. The controller 5 may also operate the manipulator unit 111 so that the angle of the suction portion 112 with respect to the object reaches a predetermined angle, after the suction portion 112 is positioned at the work position. In this manner, the position of the suction portion 112 can be finely adjusted to a more suitable position. Furthermore, the controller 5 controls the vacuum pump 12. In this manner, the controller 5 drives the vacuum pump 12, and causes the suction portion 112 to hold an object by suction. The controller 5 outputs, to the deterioration determination apparatus 11, information on the mass of an object to be held by suction and information whether or not the suction portion 112 is currently holding an object by suction.

In the present embodiment, an example is described in which the controller 5 included in the suction system 10 is provided outside the suction apparatus 1 and the deterioration determination apparatus 11. However, the present invention is not limited to the above configuration, and for example, the suction apparatus 1 may also include the controller 5, or the deterioration determination apparatus 11 may also include the controller 5.

Deterioration determination apparatus

The deterioration determination apparatus 11 includes an information obtainment unit 113 (a deformation information obtainment unit), a deterioration determination unit 115, a storage unit 116, a lifetime prediction unit 117, and a notification control unit 118.

The information obtainment unit 113 obtains, from the proximity sensor 114, information indicating the distance "d". Also, the information obtainment unit 113 obtains, from the pressure sensor 121, information indicating the pressure P. The information obtainment unit 113 obtains, from the flow rate sensor 122, information indicating the flow rate of air flowing through the tube. The information obtainment unit 113 obtains sound data from the microphone 123. Furthermore, the information obtainment unit 113 obtains, from the controller 5, information on the mass of an object to be held by suction and information indicating whether or not the suction portion 112 is currently holding the object by suction. The information obtainment unit 113 outputs, to the deterioration determination unit 115, the information indicating the pressure P, the information indicating the distance "d", the information indicating the flow rate of air, the sound data, the information on the mass of the object, and the information indicating whether or not the suction portion 112 is currently holding the object by suction.

The information obtainment unit 113 outputs, to the controller 5, deformation data such as deformation amount, deformation speed, or deformation acceleration of the suction portion 112.

The deterioration determination unit 115 obtains a deformation amount $\Delta d$ or a spring constant k representing the degree of deterioration of the suction portion 112, based on the information obtained by the information obtainment unit 113. The deterioration determination unit 115 determines whether or not the suction portion 112 has deteriorated, based on the obtained deformation amount $\Delta d$ or the spring constant k. The deterioration determination unit 115 outputs the determination result to the notification control unit 118. Data processed by the deterioration determination unit 115 (the information indicating the pressure P, the information indicating the distance d, the deformation amount $\Delta d$, the spring constant k, the information indicating the flow rate of air, the sound data, the information on the mass of the object) is output to and stored in the storage unit 116.

The deterioration determination unit 115 outputs, to the controller 5, a signal whether or not to continue the operation. When it is determined that the suction portion 112 has not deteriorated, the deterioration determination unit 115 outputs, to the controller 5, a signal for continuing the operation. In contrast, when it is determined that the suction portion 112 has deteriorated, the deterioration determination unit 115 outputs, to the controller 5, a signal for stopping the operation.

The storage unit 116 stores the data input from the deterioration determination unit 115 and the measurement date and time. The storage unit 116 is, for example, an auxiliary storage device such as a hard disk drive or a solid state drive.

The lifetime prediction unit 117 obtains, from the storage unit 116, time-series information indicating a change in the deformation amount $\Delta d$, the distance d, or the spring constant k in a predetermined period. The lifetime prediction unit 117 predicts a change in the deformation amount $\Delta d$ or the spring constant k over time, based on the time-series information in the predetermined period input from the storage unit 116. Examples of the approximation used for the prediction include, but are not limited to, linear approximation, polynomial approximation, power approximation, exponential approximation, and logarithmic approximation. In this manner, the lifetime prediction unit 117 predicts the date and time at which the deformation amount $\Delta d$ or the spring con-

stant k reaches the threshold value indicating the upper limit or the lower limit of the normal range. The lifetime prediction unit 117 estimates the date and time as the replacement timing of the suction portion 112.

The lifetime prediction unit 117 outputs, to the controller 5, a signal indicating whether or not to continue the operation, according to the predicted lifetime of the suction portion 112. The lifetime prediction unit 117 may output, to the controller 5, a signal for stopping the operation when the suction portion 112 reaches the end of its lifetime, or may also output, to the controller 5, a signal for stopping the operation before a predetermined period from the end of the lifetime of the suction portion 112. When the lifetime prediction unit 117 predicts that, for example, the end of lifetime will be reached when the suction portion 112 holds an object by suction 100 more times and stops the operation at 80 suctions before the end of lifetime, the lifetime prediction unit 117 may also output, to the controller 5, a signal for stopping the operation when the suction portion 112 holds an object by suction another 20times.

Based on the information obtained from the deterioration determination unit 115 and the lifetime prediction unit 117, the notification control unit 118 outputs, to the display unit 13 or the sound output unit 14, the determination result of whether or not the suction portion 112 has deteriorated and the replacement timing of the suction portion 112. When the deterioration determination unit 115 determines that the suction portion 112 has deteriorated, the notification control unit 118 may notify at least one of the display unit 13 and the sound output unit 14 that the suction portion 112 has deteriorated. The notification control unit 118 may cause, for example, in order to notify deterioration of the suction portion 112, the display unit 13 to emit light of a predetermined color or display an image for notifying deterioration of the suction portion 112, or may also cause the sound output unit 14 to output a predetermined sound for notifying deterioration of the suction portion 112.

The notification control unit 118 may also notify at least one of the display unit 13 and the sound output unit 14 that the lifetime of the suction portion 112 predicted by the lifetime prediction unit 117 is close to its end. The notification control unit 118 may also notify, for example, at least one of the display unit 13 and the sound output unit 14 that the suction portion 112 will reach the end of its lifetime after a predetermined period has elapsed, at a point in time before the predetermined period. Specifically, for example, the notification control unit 118 may also cause the display unit 13 to emit light of a predetermined color or display an image, for notifying that the suction portion 112 will reach the end of its lifetime after a predetermined period has elapsed. Alternatively, the notification control unit 118 may also cause the sound output unit 14 to output a predetermined sound, for notifying that the suction portion 112 will reach the end of its lifetime after a predetermined period has elapsed. The predetermined period is not limited to a specific period, but is, for example, one month.

Display unit

The display unit 13 displays light or an image, in accordance with an instruction transmitted from the notification control unit 118. The display unit 13 is not limited to a specific device as long as it emits light or displays an image, and examples of the display unit 13 include a lamp or a display.

Sound output unit

The sound output unit 14 outputs sound, in accordance with an instruction transmitted from the notification control unit 118. Examples of the sound include a buzzer sound, for example. The sound output unit 14 is not limited to a specific device as long as it outputs sound, and examples of the sound output unit 14 include a speaker.

3. Operation examples

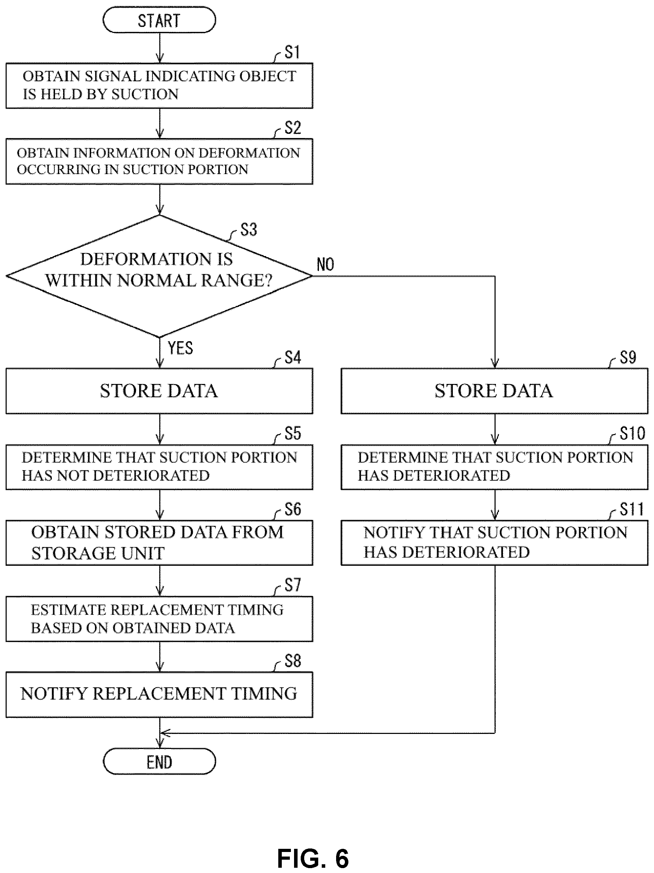

Various operation examples of the deterioration determination apparatus 11 will be described below. Hereinafter, an operation of detecting deterioration of the suction portion 112 performed by the deterioration determination apparatus 11 according to an embodiment will be described with reference to Figs. 6 to 9.

Operation example 1

Fig. 6 is a flow chart showing how the deterioration determination apparatus 11 operates. First, with reference to Fig. 6, an operation example in which the deterioration determination apparatus 11 obtains information on deformation and performs deterioration determination and lifetime prediction will be described.

First, a signal indicating that the suction portion 112 has held and lifted by suction a predetermined object W is input from the controller 5 to the information obtainment unit 113 (step S1).

Next, the information obtainment unit 113 obtains, from the proximity sensor 114, information on deformation occurring in the suction portion 112 (for example, information indicating the distance d) (step S2).

Then, the information obtained by the information obtainment unit 113 is input to the deterioration determination unit 115. The deterioration determination unit 115 obtains the deformation amount $\Delta d$ of the suction portion 112, based on the distance d obtained in a state where the suction portion 112 is holding the object W by suction. Alternatively, the deterioration determination unit 115 may also obtain, based on a measurement value indicating deformation occurring in the suction portion 112, the deformation amount $\Delta d$ that corresponds to the measurement value, using a table stored in advance. The deterioration determination unit 115 determines whether or not the deformation amount $\Delta d$ is within a normal range (step S3).

When the deterioration determination unit 115 determines that the deformation amount $\Delta d$ is within the normal range (YES in step S3), the deterioration determination unit 115 stores the data in the storage unit 116 (step S4), and determines that the suction portion 112 has not deteriorated (step S5).

After the deterioration determination unit 115 determines that the suction portion 112 has not deteriorated in step S5, the lifetime prediction unit 117 obtains the time-series information from the storage unit 116 (step S6).

Based on the time-series information, the lifetime prediction unit 117 estimates the timing to replace the suction portion 112 (step S7).

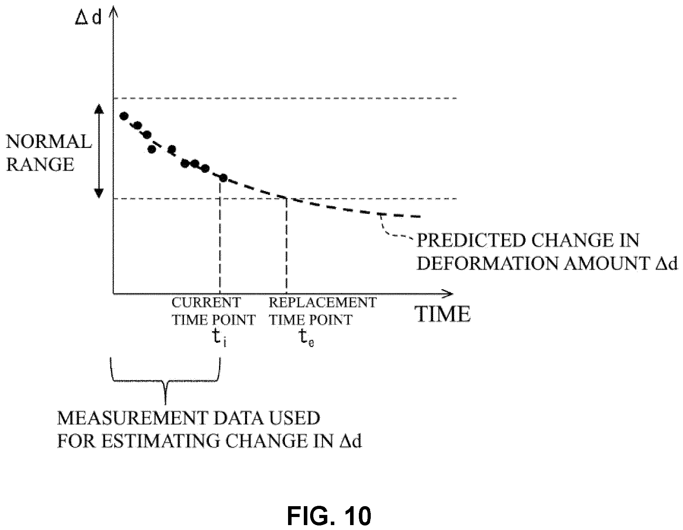

Fig. 10 shows an example of a temporal change in the deformation amount $\Delta d$ of the suction portion 112. The vertical axis represents the deformation amount $\Delta d$, and the horizontal axis represents time. When the rubber contained in the suction portion 112 deteriorates over time, the rubber becomes hard. For this reason, the deformation amount $\Delta d$ of the suction portion 112 measured when the suction portion 112 holds an object by suction decreases with time. The lifetime prediction unit 117 obtains a curve indicating the predicted change of the deformation amount $\Delta d$, using the deformation amount $\Delta d$ over a predetermined period up to time point $t_i$. The lifetime prediction unit 117 can predict the replacement timing $t_e$ from the intersection of the obtained curve and the threshold value that indicates the limit of the normal range. The lifetime prediction unit 117 outputs, to the notification control unit 118, the timing $t_e$ for replacing the suction portion 112.

The notification control unit 118 displays the replacement timing $t_e$ on the display unit 13. The notification control unit 118 causes the sound output unit 14 to output the replacement timing $t_e$ as sound (step S8). After step S8, the deterioration determination apparatus 11 ends the process.

In contrast, when the deterioration determination unit 115 determines that the deformation amount $\Delta d$ is not within the normal range (NO in step S3), the deterioration determination unit 115 stores the data in the storage unit 116 (step S9), and determines that the suction portion 112 has deteriorated (step S10). The deterioration determination unit 115 outputs the determination result to the notification control unit 118.

After the deterioration determination unit 115 determines that the suction portion 112 has deteriorated in step S10, the notification control unit 118 causes the display unit 13 to display that the suction portion 112 has deteriorated. The notification control unit 118 causes the sound output unit 14 to output a sound indicating that the suction portion 112 has deteriorated (step S11). After step S11, the deterioration determination apparatus 11 ends the process.

In this manner, the notification control unit 118 notifies the user of the determination result of whether or not the suction portion 112 has deteriorated or the replacement timing $t_e$ of the suction portion 112. According to the above-described operation example, it is possible to appropriately determine whether or not the suction portion 112 has deteriorated, which is difficult to distinguish from the appearance of the suction portion 112. In addition, it is possible to replace the suction portion 112 at an appropriate timing by predicting the lifetime of the suction portion 112. Furthermore, because the maintenance schedule can be determined before an abnormality occurs in the suction portion 112, it is possible to avoid an unexpected stop of the production line.

In the above-described operation example 1, the case where the suction portion 112 holds a predetermined object by suction has been described. However, it may also be determined whether or not the suction portion 112 has deteriorated when the suction portion 112 holds any object flowing in the production line by suction. Alternatively, it may also be determined whether or not the suction portion 112 has deteriorated when the suction portion 112 holds the object by suction with an optionally-set negative pressure. The information obtainment unit 113 obtains, from the controller 5, information on the mass of the object that has been held by suction with the suction portion 112. The information obtainment unit 113 obtains, from the pressure sensor 121, information on pressure. The storage unit 116 stores in advance a normal range of the deformation amount Δd for the obtained mass and/or the pressure. The deterioration determination unit 115 obtains, from the storage unit 116, a normal range of the deformation amount Δd that corresponds to the mass and/or pressure of the object that has been held by suction with the suction portion 112, and determines whether or not the suction portion 112 has deteriorated.

Operation example 2

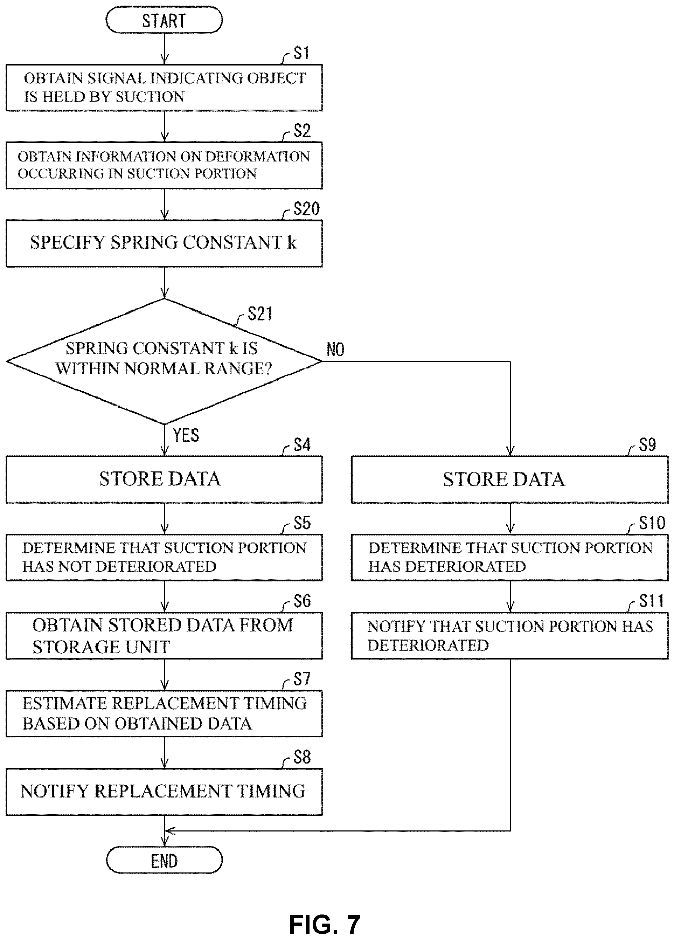

Fig. 7 is a flowchart showing the operation of the deterioration determination apparatus 11. Next, with reference to Fig. 7, an operation example will be described for a case where the deterioration determination apparatus 11 specifies the spring constant of the suction portion 112 and determines whether or not the suction portion 112 has deteriorated according to the spring constant. For convenience of description, steps having the same functions as those described in the above embodiment are denoted by the same reference numerals, and their description will not be repeated.

Steps S1 and S2 are the same as those in the operation example 1.

The deterioration determination unit 115 obtains the deformation amount Δd of the suction portion 112, based on the distance d in a state where the suction portion 112 holds the object W by suction. The deterioration determination unit 115 specifies the spring constant k, based on the deformation amount Δd, the value of the pressure P, the mass M and the suction area S of the object W (step S20). When the suction portion 112 holds a predetermined object W by suction, the mass M of the object W is known. In addition, the pressure P and the suction area S are also known.

The deterioration determination unit 115 determines whether or not the spring constant k is within a normal range (step S21). When the spring constant k is within the normal range (Yes in step S21), the process proceeds to step S4. In contrast, when the spring constant k is not within the normal range (No in step S21), the process proceeds to step S9. Steps S4 to S11 are the same as those in the operation example 1, but the step 7 will be supplementarily described.

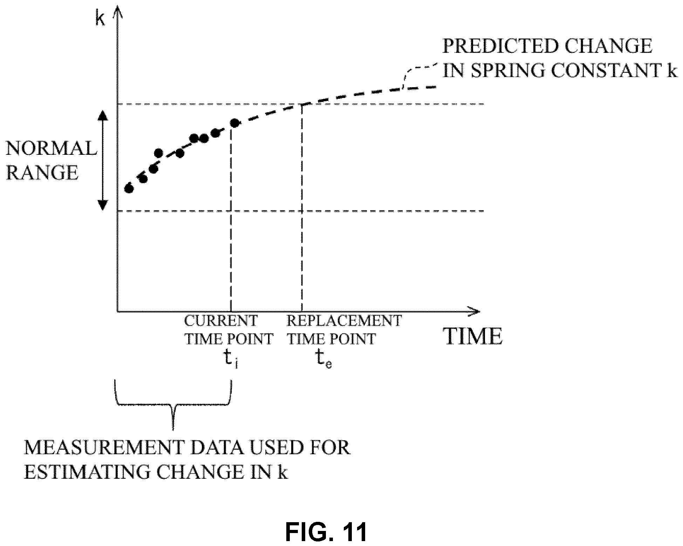

Fig. 11 shows an example of a temporal change in the spring constant k of the suction portion 112. The vertical axis represents the spring constant k, and the horizontal axis represents time. When the rubber contained in the suction portion 112 deteriorates over time, the rubber becomes hard. For this reason, the spring constant k of the suction portion 112 increases with time when the suction portion 112 holds an object by suction. The lifetime prediction unit 117 obtains a curve indicating the predicted change of the spring constant k, using the spring constants k over the predetermined period up to the time point $t_i$. The lifetime prediction unit 117 can predict the replacement timing $t_e$ from the intersection of the obtained curve and the threshold value that indicates the limit of the normal range.

In the above-described operation example 1, the case where the suction portion 112 holds a predetermined object by suction has been described. However, it may also be determined whether or not the suction portion 112 has deteriorated when the suction portion 112 holds any object flowing in the production line by suction. Alternatively, it may also be determined whether or not the suction portion 112 has deteriorated when the suction portion 112 holds the object by suction with an optionally-set negative pressure. The information obtainment unit 113 obtains, from the controller 5, information on the mass of an object that has been held by suction with the suction portion 112. The information obtainment unit 113 obtains, from the pressure sensor 121, information on pressure. The deterioration determination unit 115 obtains the spring constant k of the suction portion 112, using the mass of the object that has been held by suction with the suction portion 112, the pressure, and the deformation amount Δd of the suction portion 112.

Operation example 3

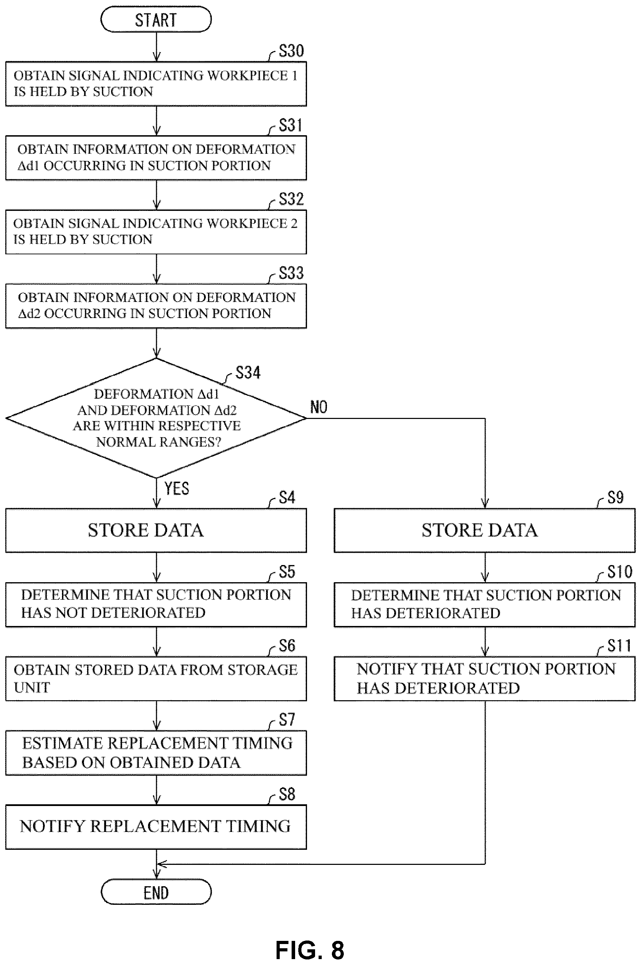

Fig. 8 is a flowchart showing the operation of the deterioration determination apparatus 11 according to an embodiment of the present invention. Next, with reference to Fig. 8, an operation example in which the deterioration determination apparatus 11 causes the suction portion 112 to sequentially hold a plurality of objects W having different masses by suction, obtains information on deformation of the suction portion 112 in each case, and determines whether or not the suction portion has deteriorated. For convenience of description, steps having the same functions as those described in the above embodiment are denoted by the same reference numerals, and their description will not be repeated.

First, a signal indicating that the suction portion 112 has held and lifted an object 1 by suction is input from the controller 5 to the information obtainment unit 113 (step S30). At this time, information on the mass of the object 1 is also input from the controller 5 to the information obtainment unit 113.

Next, the information obtainment unit 113 obtains, from the proximity sensor 114, information on deformation of the suction portion 112 holding the object 1 by suction (for example, information indicting the distance d1) (step S31).

Next, a signal indicating that the suction portion 112 has held and lifted an object 2 by suction is input from the controller 5 to the information obtainment unit 113 (step S32). At this time, information on the mass of the object 2 is also input from the controller 5 to the information obtainment unit 113. Here, the object 1 and the object 2 have different masses. Accordingly, the object 1 and the object 2 have different normal ranges regarding the deformation of the suction portion 112.

Next, the information obtainment unit 113 obtains, from the proximity sensor 114, information on deformation of the suction portion 112 when the suction portion 112 holds the object 2 by suction (for example, information indicating a distance d2) (step S33).

Next, the information that is obtained when the suction portion 112 sequentially holds the object 1 and the object 2 by suction and that is obtained by the information obtainment unit 113 is input to the deterioration determination unit 115. The deterioration determination unit 115 obtains the deformation amount $\Delta d1$ of the suction portion 112, based on the distance d1 in a state where the suction portion 112 holds the object 1 by suction. In addition, the deterioration determination unit 115 obtains the deformation amount $\Delta d2$ of the suction portion 112, based on the distance d2 in a state where the suction portion 112 holds the object 2 by suction. The deterioration determination unit 115 determines whether or not the deformation amount $\Delta d1$ and the deformation amount $\Delta d2$ are within the respective normal ranges (step S34). When the deformation amount $\Delta d1$ is within its normal range and the deformation amount $\Delta d2$ is also within its normal range, the process proceeds to step S4. In contrast, when the deformation amount $\Delta d1$ is not within its normal range or the deformation amount $\Delta d2$ is not within its normal range, the process proceeds to step S9.

Steps S4 to S11 are the same as those in the operation example 1.

In the operation example 3 described above, the deterioration determination method is limited to a case where two types of objects are used, but three or more types of objects may be used in practice.

Although the determination method using the deformation amount $\Delta d$ is described in the operation example 3, the determination method using the spring constant k may also be applied to a case in which a plurality of objects are used as in the operation example 2. Ideally, the spring constant k is considered to be constant, regardless of the mass of the object. In this case, the deterioration determination unit 115 specifies spring constants k1 to kn of a plurality of objects 1 to n (n is an integer of 2 or more), and calculates an average value k of the spring constants k1 to kn. Then, the deterioration determination unit 115 determines whether or not the average value k is within a normal range of the spring constant. The deterioration determination unit 115 may also obtain a representative value other than the average value (for example, a minimum approximation, a minimum, a maximum, or an intermediate value) from the plurality of spring constants k1 to kn, and determine whether or not the representative value is within a normal range.

Operation example 4

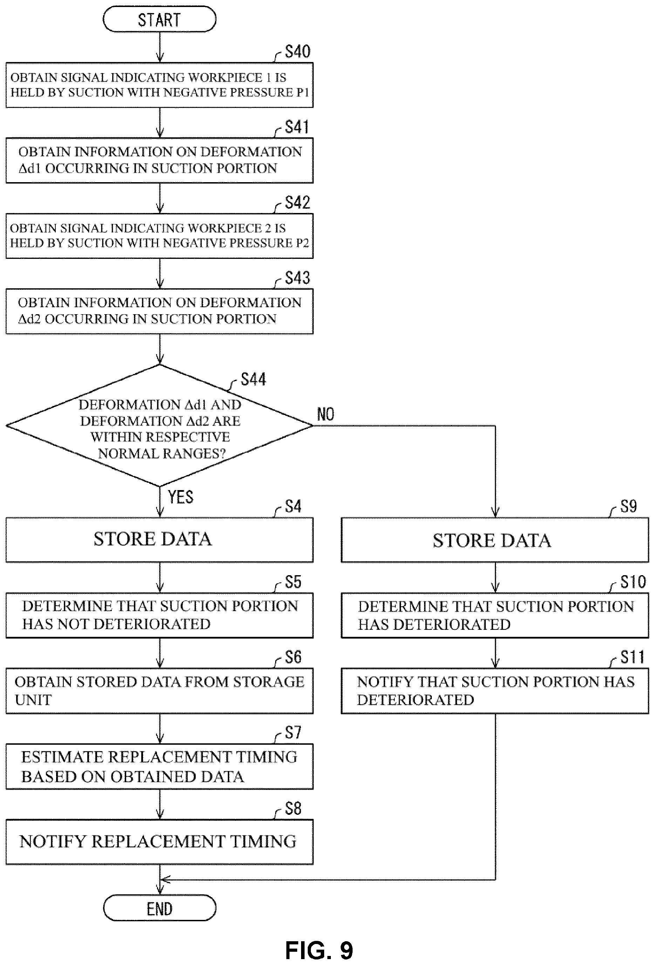

Fig. 9 is a flowchart showing the operation of the deterioration determination apparatus 11 according to still another embodiment of the present invention. Next, with reference to Fig. 9, an operation example will be described in which the deterioration determination apparatus 11 causes the suction portion 112 to sequentially hold an object by suction with a plurality of negative pressures, obtains information on deformation of the suction portion 112 in each case, and determines whether or not the suction portion 112 has deteriorated. For convenience of description, steps having the same functions as those described in the above embodiment are denoted by the same reference numerals, and their description will not be repeated.

First, a signal indicating that the suction portion 112 has held and lifted an object by suction with a first negative pressure is input from the controller 5 to the information obtainment unit 113 (step S40).

Next, the information obtainment unit 113 obtains, from the proximity sensor 114, information on deformation of the suction portion 112 in a state of holding the object by suction with the first negative pressure (for example, information indicating a distance d1) (step S41). In addition, the information obtainment unit 113 obtains, from the pressure sensor 121, information indicating the first negative pressure P1.

Next, a signal indicating that the suction portion 112 has held and lifted the object by suction with a second negative pressure is input from the controller 5 to the information obtainment unit 113 (step S42). The first negative pressure and the second negative pressure are different from each other. Accordingly, the first negative pressure and the second negative pressure have different normal ranges related to deformation.

Next, the information obtainment unit 113 obtains, from the proximity sensor 114, information on deformation of the suction portion 112 in a state of holding the object by suction with the second negative pressure (for example, information indicating a distance d2) (step S43). In addition, the information obtainment unit 113 obtains, from the pressure sensor 121, information indicating the second negative pressure P2.

Next, the information that is obtained when the object is sequentially held by suction with the first negative pressure P1 and the second negative pressure P2 and that is obtained by the information obtainment unit 113 is input to the deterioration determination unit 115. The deterioration determination unit 115 obtains the deformation amount $\Delta d1$ of the suction portion 112, based on the distance d1 in a state where the suction portion 112 holds the object by suction with the first negative pressure P1. In addition, the deterioration determination unit 115 obtains the deformation amount $\Delta d2$ of the suction portion 112, based on the distance d2 in a state where the suction portion 112 holds the object by suction with the second negative pressure P2. The deterioration determination unit 115 determines whether or not the deformation amount $\Delta d1$ and the deformation amount $\Delta d2$ are within the respective normal ranges (step S44). When the deformation amount $\Delta d1$ is within its normal range and the deformation amount $\Delta d2$ is also within its normal range, the process proceeds to step S4. In contrast, when the deformation amount $\Delta d1$ is not within its normal range or the deformation amount $\Delta d2$ is not within its normal range, the process proceeds to step S9.

Steps S4 to S11 are the same as those in the operation example 1.

In the operation example 4 described above, the deterioration determination method is limited to a case where two types of negative pressures are used, but three or more types of negative pressures may be used in practice.

Although the determination method using the deformation amount $\Delta d$ is described in the operation example 4, the determination method using the spring constant k may also be applied to a case in which a plurality of negative pressures are used as in the operation example 2. Ideally, the spring constant k is considered to be constant, regardless of negative pressure. In this case, the deterioration determination unit 115 specifies spring constants k1 to kn for the plurality of first to n-th negative pressures, and calculates an average value k of the spring constants k1 to kn. Then, the deterioration determination unit 115 determines whether or not the average value k is within a normal range of the spring constant. The deterioration determination unit 115 may also obtain a representative value other than the average value (for example, a minimum approximation, a minimum, a maximum, or an intermediate value) from the plurality of spring constants k1 to kn, and determine whether or not the representative value is within a normal range.

Operation examples 1 to 4 described above can be implemented in combination. The spring constant may also be specified, for example, by holding a plurality of objects having different masses by suction with a plurality of negative pressures that are different from each other.

Modified examples

The deterioration determination unit 115 may also determine whether or not the suction portion 112 has deteriorated, that is to say, whether or not the suction portion 112 is in an abnormal condition, depending on whether or not the pressure (the first negative pressure P1 or the second negative pressure P2) is within a normal range that is related to a pressure and set for the suction portion 112.

When the pressure is within the normal range, the deterioration determination unit 115 determines that the suction portion 112 has not deteriorated. In contrast, when the pressure is outside the normal range, the deterioration determination unit 115 determines that the suction portion 112 has deteriorated. When there is a crack in the suction portion 112, for example, air flows into the suction portion 112, and thus the decrease in pressure is reduced. Similarly, when the suction portion 112 is deformed due to deterioration, the suction portion 112 does not come into intimate contact with an object, and air may flow into the suction portion 112. Also, when dust or the like is sandwiched between the suction portion 112 and an object, the suction portion 112 does not come into intimate contact with the object, and air may flow into the suction portion 112.

Also, the information obtainment unit 113 may also obtain, from the flow rate sensor 122 or the microphone 123, information indicating the flow rate of air flowing through the tube, or sound data. When the information obtainment unit 113 obtains the flow rate of air instead of pressure, the deterioration determination unit 115 may also determine whether or not the suction portion 112 has deteriorated, that is to say, whether or not the suction portion 112 is in an abnormal condition, according to the flow rate. Similarly, when the information obtainment unit 113 obtains sound instead of pressure, the deterioration determination unit 115 may also determine whether or not the suction portion 112 has deteriorated, that is to say, whether or not the suction portion 112 is in an abnormal condition, according to the sound. When air flows into the suction portion 112, for example, the flow rate of air or the sound increases due to the flow of air.

In order to determine whether or not the suction portion 112 has deteriorated, the suction system 10 may include any one of the pressure sensor 121, the flow rate sensor 122, and the microphone 123 (the other two devices may also be omitted).

Implementation example using software

Control blocks (in particular, the information obtainment unit 113, the deterioration determination unit 115, the lifetime prediction unit 117, and the notification control unit 118) included in the deterioration determination apparatus 11 may be implemented by a logic circuit (hardware) formed in an integrated circuit (IC chip) or the like, or may also be implemented by software.

In the latter case, the deterioration determination apparatus 11 includes a computer that executes instructions of a program, which is software for implementing the functions. The computer includes, for example, one or more processors, and a computer-readable recording medium storing the program. In the computer, the processor reads the program from the recording medium and executes the program, thereby achieving the object of the present invention. As the processor, for example, a central processing unit (CPU) can be used. As the recording medium, a "non-transitory tangible medium" such as a read only memory (ROM), a tape, a disk, a card, a semiconductor memory, or a programmable logic circuit can be used. In addition, the deterioration determination apparatus 11 may further include, for example, a random access memory (RAM) that develops the program. The program may be supplied to the computer through any transmission medium (for example, a communication network, or a broadcast wave) capable of transmitting the program. One aspect of the present invention can also be achieved in the form of a data signal embedded in a carrier wave in which the program is embodied by electronic transmission.

The present invention is not limited to the above-described embodiments, and various modifications are possible within the scope of the claims. Embodiments obtained by appropriately combining technical means disclosed in different embodiments are also included in the technical scope of the present invention.

INDEX TO THE REFERENCE NUMERALS

1       Suction apparatus
5       Controller
10      Suction system
11      Deterioration determination apparatus
12      Vacuum pump
13      Display unit
14      Sound output unit
101     Sensor assembly
102     Body
104     Fixture
111     Manipulator unit
112     Suction portion
113     Information obtainment unit (deformation information obtainment unit)
114     Proximity sensor
115     Deterioration determination unit
116     Storage unit
117     Lifetime prediction unit
118     Notification control unit
121     Pressure sensor
122     Flow rate sensor
123     Microphone

**Claims**

1. A deterioration determination apparatus (11), comprising:

    a deformation information obtainment unit (113) configured to obtain information on deformations of a suction portion (112) occurring when the suction portion (112) sequentially holds a plurality of objects having different masses by suction, which suction portion (112) is configured to hold an object by suction with negative pressure and elastically deforms by the negative pressure; and
    a deterioration determination unit (115) configured to determine whether or not the suction portion (112) has deteriorated, depending on whether or not the deformations of the suction portion (112) occurring when the suction portion (112) sequentially holds the plurality of objects by suction are within normal ranges set for the respective objects.

2. The deterioration determination apparatus (11) according to claim 1, further comprising:
a lifetime prediction unit (117) configured to predict a lifetime of the suction portion (112), depending on a temporal change of the deformation of the suction portion (112) occurring when the suction portion (112) holds the object by suction.

3. The deterioration determination apparatus (11) according to claim 1 or 2,

    wherein the deformation information obtainment unit (113) is configured to obtain information on deformations of the suction portion (112) occurring when the suction portion (112) sequentially holds a plurality of objects having different masses by suction, and
    the deterioration determination unit (115) is configured to:

        specify a value representing a spring constant of the suction portion, from the deformations (112) occurring when the suction portion (112) sequentially holds the plurality of objects by suction with one or more predetermined negative pressures, and
        determine whether or not the suction portion (112) has deteriorated, depending on the value representing the spring constant.

4. The deterioration determination apparatus (11) according to any one of claims 1 to 2,

    wherein the deformation information obtainment unit (113) is configured to obtain information on deformations of the suction portion (112) occurring when the suction portion (112) sequentially holds the object by suction with a plurality of negative pressures, and

the deterioration determination unit (115) is configured to determine whether or not the suction portion (112) has deteriorated, depending on the deformations of the suction portion (112) occurring when the suction portion (112) sequentially holds the object by suction with the plurality of negative pressures.

5. A deterioration determination method, comprising:

a deformation information obtainment step of obtaining information on deformations of a suction portion (112) occurring when the suction portion (112) sequentially holds a plurality of objects having different masses by suction, which suction portion (112) is configured to hold an object by suction with negative pressure and elastically deforms by the negative pressure; and

a deterioration determination step of determining whether or not the suction portion (112) has deteriorated, depending on whether or not the deformations of the suction portion (112) occurring when the suction portion (112) sequentially holds the plurality of objects by suction are within normal ranges set for the respective objects.

6. A control program for causing a computer to function as the deterioration determination apparatus (11) according to claim 1, wherein the control program causes the computer to function as the deformation information obtainment unit (113) and the deterioration determination unit (115).

**Patentansprüche**

1. Verschlechterungsbestimmungsvorrichtung (11), aufweisend:

eine Verformungsinformationserlangungseinheit (113), die eingerichtet ist, Informationen über Verformungen eines Saugabschnitts (112) zu erlangen, die auftreten, wenn der Saugabschnitt (112) sequentiell mehrere Objekte mit unterschiedlichen Massen durch Saugen hält, wobei der Saugabschnitt (112) eingerichtet ist, ein Objekt durch Saugen mit Unterdruck zu halten und sich durch den Unterdruck elastisch verformt; und

eine Verschlechterungsbestimmungseinheit (115), die eingerichtet ist, zu bestimmen, ob sich der Saugabschnitt (112) verschlechtert hat oder nicht, abhängig davon, ob die Verformungen des Saugabschnitts (112), die auftreten, wenn der Saugabschnitt (112) sequentiell die mehreren Objekte durch Saugen hält, innerhalb normaler Bereiche liegen, die für die jeweiligen Objekte eingestellt sind oder nicht.

2. Verschlechterungsbestimmungsvorrichtung (11) nach Anspruch 1, ferner aufweisend: eine Lebensdauervorhersageeinheit (117), die eingerichtet ist, eine Lebensdauer des Saugabschnitts (112) abhängig von einer zeitlichen Änderung der Verformung des Saugabschnitts (112), die auftritt, wenn der Saugabschnitt (112) das Objekt durch Saugen hält, vorherzusagen.

3. Verschlechterungsbestimmungsvorrichtung (11) nach Anspruch 1 oder 2,

wobei die Verformungsinformationserlangungseinheit (113) eingerichtet ist, Informationen über Verformungen des Saugabschnitts (112) zu erlangen, die auftreten, wenn der Saugabschnitt (112) sequentiell mehrere Objekte mit unterschiedlichen Massen durch Saugen hält, und

die Verschlechterungsbestimmungseinheit (115) eingerichtet ist:

einen Wert, der eine Federkonstante des Saugabschnitts repräsentiert, aus den Verformungen (112) zu spezifizieren, die auftreten, wenn der Saugabschnitt (112) sequentiell die mehreren Objekte durch Saugen mit einem oder mehreren vorbestimmten Drücken hält, und

zu bestimmen, ob sich der Saugabschnitt (112) verschlechtert hat oder nicht, abhängig von dem Wert, der die Federkonstante repräsentiert.

4. Verschlechterungsbestimmungsvorrichtung (11) nach einem der Ansprüche 1 bis 2,

wobei die Verformungsinformationserlangungseinheit (113) eingerichtet ist, Informationen über Verformungen des Saugabschnitts (112) zu erlangen, die auftreten, wenn der Saugabschnitt (112) sequentiell das Objekt durch Saugen mit mehreren Drücken hält, und

die Verschlechterungsbestimmungseinheit (115) eingerichtet ist, zu bestimmen, ob sich der Saugabschnitt (112) verschlechtert hat oder nicht, abhängig von den Verformungen des Saugabschnitts (112), die auftreten, wenn der Saugabschnitt (112) sequentiell das Objekt durch Saugen mit den mehreren Drücken hält.

5. Verschlechterungsbestimmungsverfahren, aufweisend:

einen Verformungsinformationserlangungsschritt des Erlangens von Informationen über Verformungen eines Saugabschnitts (112), die auftreten, wenn der Saugabschnitt (112) sequentiell mehrere Objekte mit unterschiedlichen Massen durch Saugen hält, wobei der Saugabschnitt (112) eingerichtet ist, ein Objekt durch Saugen mit Unterdruck zu halten und sich durch den Unterdruck elastisch verformt; und einen Verschlechterungsbestimmungsschritt des Bestimmens, ob sich der Saugabschnitt (112) verschlechtert hat oder nicht, abhängig davon, ob die Verformungen des Saugabschnitts (112), die auftreten, wenn der Saugabschnitt (112) sequentiell die mehreren Objekte durch Saugen hält, innerhalb normaler Bereiche liegen, die für die jeweiligen Objekte eingestellt sind oder nicht.

6. Steuerprogramm zum Bewirken, dass ein Computer als die Verschlechterungsbestimmungsvorrichtung (11) nach Anspruch 1 funktioniert, wobei das Steuerprogramm bewirkt, dass der Computer als die Verformungsinformationserlangungseinheit (113) und die Verschlechterungsbestimmungseinheit (115) funktioniert.

**Revendications**

1. Appareil de détermination de détérioration (11), comprenant :

une unité d'obtention d'informations de déformation (113) configurée pour obtenir des informations sur des déformations d'une partie d'aspiration (112) se produisant lorsque la partie d'aspiration (112) maintient séquentiellement une pluralité d'objets ayant différentes masses par aspiration, laquelle partie d'aspiration (112) est configurée pour maintenir un objet par aspiration avec une pression négative et se déforme élastiquement par la pression négative ; et une unité de détermination de détérioration (115) configurée pour déterminer si la partie d'aspiration (112) s'est détériorée ou non, selon que les déformations de la partie d'aspiration (112) se produisant lorsque la partie d'aspiration (112) maintient séquentiellement la pluralité d'objets par aspiration se trouvent ou non dans des plages normales définies pour les objets respectifs.

2. Appareil de détermination de détérioration (11) selon la revendication 1, comprenant en outre : une unité de prédiction de durée de vie (117) configurée pour prédire une durée de vie de la partie d'aspiration (112), selon un changement temporel de la déformation de la partie d'aspiration (112) se produisant lorsque la partie d'aspiration (112) maintient l'objet par aspiration.

3. Appareil de détermination de détérioration (11) selon la revendication 1 ou 2,

dans lequel l'unité d'obtention d'informations de déformation (113) est configurée pour obtenir des informations sur des déformations de la partie d'aspiration (112) se produisant lorsque la partie d'aspiration (112) maintient séquentiellement une pluralité d'objets ayant différentes masses par aspiration, et l'unité de détermination de détérioration (115) est configurée pour :

spécifier une valeur représentant une constante de ressort de la partie d'aspiration, à partir des déformations (112) se produisant lorsque la partie d'aspiration (112) maintient séquentiellement la pluralité d'objets par aspiration avec une ou plusieurs pressions négatives prédéterminées, et déterminer si la partie d'aspiration (112) s'est détériorée ou non, selon la valeur représentant la constante de ressort.

4. Appareil de détermination de détérioration (11) selon l'une quelconque des revendications 1 à 2,

dans lequel l'unité d'obtention d'informations de déformation (113) est configurée pour obtenir des informations sur des déformations de la partie d'aspiration (112) se produisant lorsque la partie d'aspiration (112) maintient séquentiellement l'objet par aspiration avec une pluralité de pressions négatives, et l'unité de détermination de détérioration (115) est configurée pour déterminer si la partie d'aspiration (112) s'est détériorée ou non, selon les déformations de la partie d'aspiration (112) se produisant lorsque la partie d'aspiration (112) maintient séquentiellement l'objet par aspiration avec la pluralité de pressions négatives.

5. Procédé de détermination de détérioration, comprenant :

une étape d'obtention d'informations de déformation consistant à obtenir des informations sur des déformations d'une partie d'aspiration (112) se produisant lorsque la partie d'aspiration (112) maintient séquentiellement une pluralité d'objets ayant différentes masses par aspiration, laquelle partie d'aspiration (112) est configurée pour maintenir un objet par aspiration avec une pression négative et se déforme élastiquement par la pression négative ; et

une étape de détermination de détérioration consistant à déterminer si la partie d'aspiration (112) s'est détériorée ou non, selon que les déformations de la partie d'aspiration (112) se produisant lorsque la partie d'aspiration (112) maintient séquentiellement la pluralité d'objets par aspiration se trouvent ou non dans des plages normales définies pour les objets respectifs.

6. Programme de commande pour amener un ordinateur à fonctionner comme l'appareil de détermination de détérioration (11) selon la revendication 1, dans lequel le programme de commande amène l'ordinateur à fonctionner comme l'unité d'obtention d'informations de déformation (113) et l'unité de détermination de détérioration (115).

**FIG. 1**

**FIG. 2**

SUCTION 10
SYSTEM

DETERIORATION DETERMINATION APPARATUS  ⌐11

LIFETIME
PREDICTION
UNIT  ⌐117

STORAGE UNIT  ⌐116

DETERIORATION
DETERMINATION
UNIT  ⌐115

NOTIFICATION
CONTROL UNIT  ⌐118

INFORMATION OBTAINMENT UNIT  ⌐113

DISPLAY UNIT  ⌐13

PRESSURE
SENSOR  ⌐121

PROXIMITY
SENSOR  ⌐114

SOUND
OUTPUT UNIT  ⌐14

FLOW RATE
SENSOR  ⌐122

SUCTION
PORTION  ⌐112

MICROPHONE  ⌐123

MANIPULATOR
UNIT  ⌐111

VACUUM PUMP  ⌐12

CONTROLLER  ⌐5

SUCTION APPARATUS  ⌐1

## FIG. 3

18

**FIG. 4**

**FIG. 5**

```
                        ( START )

                                          ⌐S1
          OBTAIN SIGNAL INDICATING OBJECT
               IS HELD BY SUCTION

                                          ⌐S2
          OBTAIN INFORMATION ON DEFORMATION
             OCCURRING IN SUCTION PORTION


                              ⌐S3
                 DEFORMATION IS            NO
              WITHIN NORMAL RANGE?

                      YES
                                ⌐S4                          ⌐S9
              STORE DATA                          STORE DATA

                                ⌐S5                          ⌐S10
        DETERMINE THAT SUCTION PORTION      DETERMINE THAT SUCTION PORTION
           HAS NOT DETERIORATED                HAS DETERIORATED

                                ⌐S6                          ⌐S11
         OBTAIN STORED DATA FROM            NOTIFY THAT SUCTION PORTION
             STORAGE UNIT                      HAS DETERIORATED

                                ⌐S7
        ESTIMATE REPLACEMENT TIMING
           BASED ON OBTAINED DATA

                                ⌐S8
         NOTIFY REPLACEMENT TIMING


                        ( END )
```

# FIG. 6

20

START

OBTAIN SIGNAL INDICATING OBJECT IS HELD BY SUCTION — S1

OBTAIN INFORMATION ON DEFORMATION OCCURRING IN SUCTION PORTION — S2

SPECIFY SPRING CONSTANT k — S20

SPRING CONSTANT k IS WITHIN NORMAL RANGE? — S21

NO

YES

STORE DATA — S4

DETERMINE THAT SUCTION PORTION HAS NOT DETERIORATED — S5

OBTAIN STORED DATA FROM STORAGE UNIT — S6

ESTIMATE REPLACEMENT TIMING BASED ON OBTAINED DATA — S7

NOTIFY REPLACEMENT TIMING — S8

STORE DATA — S9

DETERMINE THAT SUCTION PORTION HAS DETERIORATED — S10

NOTIFY THAT SUCTION PORTION HAS DETERIORATED — S11

END

## FIG. 7

START

**S30**
OBTAIN SIGNAL INDICATING WORKPIECE 1 IS HELD BY SUCTION

**S31**
OBTAIN INFORMATION ON DEFORMATION $\Delta d1$ OCCURRING IN SUCTION PORTION

**S32**
OBTAIN SIGNAL INDICATING WORKPIECE 2 IS HELD BY SUCTION

**S33**
OBTAIN INFORMATION ON DEFORMATION $\Delta d2$ OCCURRING IN SUCTION PORTION

**S34**
DEFORMATION $\Delta d1$ AND DEFORMATION $\Delta d2$ ARE WITHIN RESPECTIVE NORMAL RANGES?

NO →

YES ↓

**S4**
STORE DATA

**S5**
DETERMINE THAT SUCTION PORTION HAS NOT DETERIORATED

**S6**
OBTAIN STORED DATA FROM STORAGE UNIT

**S7**
ESTIMATE REPLACEMENT TIMING BASED ON OBTAINED DATA

**S8**
NOTIFY REPLACEMENT TIMING

**S9**
STORE DATA

**S10**
DETERMINE THAT SUCTION PORTION HAS DETERIORATED

**S11**
NOTIFY THAT SUCTION PORTION HAS DETERIORATED

END

# FIG. 8

22

START

S40
OBTAIN SIGNAL INDICATING WORKPIECE 1 IS
HELD BY SUCTION WITH NEGATIVE PRESSURE P1

S41
OBTAIN INFORMATION ON DEFORMATION
Δd1 OCCURRING IN SUCTION PORTION

S42
OBTAIN SIGNAL INDICATING WORKPIECE 2 IS
HELD BY SUCTION WITH NEGATIVE PRESSURE P2

S43
OBTAIN INFORMATION ON DEFORMATION
Δd2 OCCURRING IN SUCTION PORTION

S44
DEFORMATION Δd1 AND
DEFORMATION Δd2 ARE
WITHIN RESPECTIVE
NORMAL RANGES?

NO

YES

S4
STORE DATA

S5
DETERMINE THAT SUCTION PORTION
HAS NOT DETERIORATED

S6
OBTAIN STORED DATA FROM STORAGE
UNIT

S7
ESTIMATE REPLACEMENT TIMING
BASED ON OBTAINED DATA

S8
NOTIFY REPLACEMENT TIMING

S9
STORE DATA

S10
DETERMINE THAT SUCTION PORTION
HAS DETERIORATED

S11
NOTIFY THAT SUCTION PORTION HAS
DETERIORATED

END

**FIG. 9**

23

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015150622 A
- JP 2012152843 A
- WO 2019101668 A1
- JP 2015167495 A
- JP 2008092889 A